# EUROPÄISCHE PATENTANMELDUNG

(11) **EP 2 687 079 A2**
(43) Veröffentlichungstag der Anmeldung: **22.01.2014**
(21) Anmeldenummer: 13162072.6
(22) Anmeldetag: 03.04.2013
(51) Int. Cl.: A01D 45/02

(54) **Reihenunabhängig arbeitendes Vorsatzgerät zum Ernten von stängeligem Erntegut**

(30) Priorität: 20.07.2012 DE 102012106603
(71) Anmelder: CLAAS Hungaria Kft., 5200 Törökszentmiklos (HU)
(72) Erfinder: Tilly, Thomas, 48231 Warendorf (DE); Engler, Thomas Dennis, 87656 Germaningen (DE); Aerdker, Bernhard, 48231 Warendorf (DE); Lütke-Harmann, Tim, 48324 Sendenhorst (DE)

(57) **Zusammenfassung**

Die vorliegende Erfindung betrifft ein reihenunabhängig arbeitendes Vorsatzgerät (1) mit Ernteeinrichtungen (2, 3, 28) zum Ernten von stängeligem Erntegut, mit sich über seine Breite erstreckenden Einzugseinrichtungen (28), den Einzugseinrichtungen (28) in Richtung des Erntegutflusses nachgeordnete Pflückeinrichtungen (2) und zumindest einer den Einzugs- und Pflückeinrichtungen (2, 28) nachgeordneten Querfördereinrichtung (3), die über einen gemeinsamen ersten Antriebsstrang (35) antreibbar sind, wobei das Vorsatzgerät (1) derart vorkonfektioniert ist, dass es mit einem zweiten Antriebsstrang (36) nachrüstbar ist, der als Antrieb für eine nachrüstbare Häckseleinrichtung (4) dient.

## Beschreibung

Die vorliegende Erfindung betrifft ein reihenunabhängig arbeitendes Vorsatzgerät zum Ernten von stängeligem Erntegut gemäß dem Oberbegriff des Anspruches 1.

Die DE 102005021792A1 betrifft ein Vorsatzgerät gemäß dem Oberbegriff des Anspruches 1. Das Vorsatzgerät, welches an einer selbstfahrenden Erntemaschine, wie einem Mähdrescher oder einem Feldhäcksler, zum Einsatz kommen kann, umfasst paarweise angeordnete Einzugs- und Pflückeinheiten, die der Aufnahme und Förderung sowie dem Ernten des stängeligen Erntegutes dienen. Den Einzugs- und Pflückeinheiten ist eine Querförderschnecke nachgelagert angeordnet, die das Erntegut einem der Zuführung in die Erntemaschine dienenden Schrägförderer zuführt. Unterhalb der Einzugs-und Pflückeinheiten befindet sich jeweils eine Mähscheibe ausgeführte Häckseleinrichtung, die Pflanzenstängel von dem im Boden verbleibenden Stumpf abtrennt. Der Antrieb dieser Komponenten, der Einzugs- und Pflückeinheiten, der Querförderschnecke sowie der Mähscheiben erfolgt über einen gemeinsamen Antriebsstrang. Hierzu wird vom Schrägförderer eine von einem Verbrennungsmotor der Erntemaschine bereitgestellte Antriebsleistung durch eine Kette oder einen Riemen auf eine Gelenkwelle des Vorsatzgerätes übertragen. Die Gelenkwelle mündet in einem ein Übersetzungsgetriebe einhausendes Getriebegehäuse, von dem die Antriebsleistung auf die anzutreibenden Komponenten verzweigt wird. Die paarweise angeordneten Einzugs-und Pflückeinheiten sind über eine durchgehende, sich über die Breite des Vorsatzgerätes erstreckende Welle antriebsseitig miteinander verbunden. Von der Welle verzweigen Winkelgetriebe zu den jeweiligen Einzugs- und Pflückeinheiten sowie den jeweiligen Mähscheiben.

Wie anhand des Standes der Technik geschildert, beruhen die heutigen Antriebskonzepte für reihenunabhängig arbeitende Vorsatzgeräte darauf, dass der Antrieb der jeweiligen Einzugs- und Pflückeinheit sowie der zugehörigen Häckseleinrichtung zu einer gemeinsamen Einheit zusammengefasst sind. Zwar wird dadurch erreicht, dass nur wenige integrierte Zahnradgetriebe genutzt werden, jedoch ist es von Nachteil, dass dieses Antriebskonzept für ein Vorsatzgerät die Lasten der Häckseleinrichtung berücksichtigen muss.

Aufgabe der vorliegenden Erfindung ist es, ein reihenunabhängig arbeitendes Vorsatzgerät derart weiterzubilden, welches sich durch einen vereinfachten und kostengünstigen Aufbau auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass das Vorsatzgerät derart vorkonfektioniert ist, dass es mit einem zweiten Antriebsstrang nachrüstbar ist, der als Antrieb für ein an dem Vorsatzgerät nachrüstbare Häckseleinrichtung dient. Die durch das Vorsehen eines bei Bedarf nachrüstbaren zweiten Antriebsstranges nebst einer Häckseleinrichtung erreichbare Modularität ermöglicht einen einfacheren und kostengünstigeren Aufbau des Vorsatzgerätes. Zudem wird durch diese Lösung eine hohe Flexibilität beim Einsatz des Vorsatzgerätes erreicht, da auf Grund der Modularität der Antriebsstrang mit Häckseleinrichtung in gleicher Weise abbaubar ist. Insbesondere der erste Antriebsstrang, der dem gemeinsamen Antrieb der Ernteeinrichtungen, das heißt dem Antrieb der Einzugseinrichtungen, der Pflückeinrichtungen sowie der Querfördereinrichtung dient, lässt sich kostengünstiger dimensionieren, da der Leistungsbedarf der Häckseleinrichtung bei der Auslegung des ersten Antriebsstranges unberücksichtig bleibt. Zudem zeichnet sich das Vorsatzgerät, bedingt durch das Weglassen der nicht bei allen Erntebedingungen erforderlichen Häckseleinrichtung, durch ein geringeres Gesamtgewicht aus. Ein weiterer Vorteil der Modularität besteht darin, dass die Auslegung der Eckleistung des gemeinsamen Antriebsstranges für die Einzugseinrichtung, die Pflückeinrichtung sowie die Querfördereinrichtung und des zweiten nachrüstbaren Antriebsstranges für die nachrüstbare Häckseleinrichtung geringer ist, als die eines einzigen Antriebsstranges für alle Komponenten.

Vorteilhafterweise können der zweite Antriebsstrang und die von diesem angetriebenen Häckseleinrichtung als separate Module ausgeführt sein. Auf diese Weise lässt sich die Montage und Demontage des zweiten Antriebsstranges und der Häckseleinrichtung leichter bewerkstelligen.

Insbesondere können der erste Antriebsstrang und der zweite Antriebsstrang Mittel zur Variation der an die angetriebenen Aggregate abgebbaren Drehzahl aufweisen. Dies erlaubt eine getrennte Ein- und Verstellbarkeit der Antriebsdrehzahlen der Ernteeinrichtung einerseits und der nachrüstbaren Häckseleinrichtung andererseits, wodurch eine bessere Anpassung an sich ändernde Erntebedingungen erreichbar ist.

Hierbei kann das Mittel eine stufenlose oder eine abgestufte Verstellung der Drehzahl ermöglichen. Als Mittel zur stufenlosen Variation der Drehzahl der von dem ersten und dem zweiten Antriebsstrang separat antreibbaren Aggregate kann ein Variator vorgesehen sein. Alternative kann eine hydromechanische oder elektrische Antriebslösung vorgesehen sein, die eine stufenlose Verstellung der Drehzahl erlaubt. Für eine abgestufte Variation der Drehzahl kann ein manuell verstellbarer Riemenantrieb als Mittel vorgesehen. Die Ausführung der Antriebsstränge mit einem Mittel zur abgestuften oder stufenlosen Verstellung der Drehzahl erlaubt eine flexible Anpassung auch an stark variierende Entebedingungen.

Vorzugsweise kann die Häckseleinrichtung unabhängig von den Ernteeinrichtungen schaltbar sein. Durch die Separierung der Antriebsstränge von Einzugseinrichtungen, Pflückeinrichtungen sowie Querfördereinrichtung einerseits und Häckseleinrichtung andererseits lassen sich die Ernteeinrichtungen und die Häckseleinrichtung nacheinander Schalten, was insbesondere bei einem Einschalten des Vorsatzgerätes von Vorteil ist. So lässt sich beispielsweise zunächst die Häckseleinrichtung einschalten, bevor über den ersten Antriebsstrang die übrigen Ernteeinrichtungen des Vorsatzgerätes zugeschaltet werden beziehungsweise umgekehrt. Die Belastung des Antriebsaggregates, üblicherweise ein Verbrennungsmotor der das erfindungsgemäße Vorsatzgerät aufnehmenden und antreibenden Erntemaschine, wird somit reduziert.

Dabei kann der zweite Antriebsstrang durch werkzeugloses Aus- und Einkoppeln einer Gelenkwelle schaltbar sein.

Alternativ kann der zweite Antriebsstrang durch eine zentrale Kupplung schaltbar sein. Hierdurch lässt sich der Zeitaufwand gegenüber dem Stand der Technik, der jeweils eine manuell zu betätigende Kupplung für jede Einheit der Einzugseinrichtung sowie der Pflückeinrichtung für das Zu- und Aschalten der Häckseleinrichtung vorsieht, deutlich reduzieren. Zudem ist diese Lösung wesentlich komfortabler zu handhaben. Ein weiterer Vorteil der Verwendung einer Kupplung besteht darin, dass der modulare Aufbau der Antriebsstränge eine zusätzliche Anlaufkupplung zur Begrenzung des maximalen Drehmomentes beim Ein- und Auskuppeln zulässt. Hierzu kann beispielsweise eine Reibkupplung im zweiten Antriebsstrang eingesetzt werden, welche die beim Schalten dissipierte Reibungsenergie aufnimmt.

In vorteilhafter Weiterbildung kann vorgesehen sein, dass der Schaltvorgang automatisiert durchführbar ist. Das Schalten der Kupplung kann aus der Kabine heraus erfolgen, so dass der Bediener der Erntemaschine diese nicht verlassen muss. Hierzu betätigt der Bediener beispielsweise einen Schalter, der eine Aktorik zur Betätigung der Kupplung ansteuert. Der Vorgang des Einschaltens des Vorsatzgerätes lässt sich dahingehend optimieren, dass zunächst der zweite Antriebsstrang für die Häckseleinrichtung eingekuppelt wird, bevor in einem zweiten Schritt die Einzugseinrichtungen, die Pflückeinrichtungen sowie die mindestens eine Querfördereinrichtung in Betrieb genommen werden. Hierdurch lassen sich die auftretenden Massenkräfte, die den Antrieb belasten, reduzieren.

Weiterhin kann in dem zweiten Antriebsstrang ein zentraler Freilauf vorgesehen sein. Ein zentraler Freilauf trägt zur Reduzierung der Kosten bei, ebenso wie zu einer Bauraum- und Gewichtsreduzierung bei dem Vorsatzgerät.

Vorzugsweise kann die Häckseleinrichtung ein sich im Wesentlichen über die Breite des Vorsatzgerätes erstreckendes Getriebegehäuse aufweisen, in welches vertikal verlaufende Messerwellen abschnittsweise hineinragen sowie die Messerwellen antreibende Winkelgetriebe angeordnet sind. Das Getriebegehäuse umfasst alle wesentlichen Komponenten der Häckseleinrichtung, die auf diese Weise in einer nachrüstbaren Baugruppe zusammenfassbar sind.

Insbesondere kann an dem Getriebegehäuse ein Hauptgetriebe angeordnet sein, welches Bestandteil des zweiten Antriebsstranges ist. Das Hauptgetriebe welches an eine Hauptantriebswelle der Häckseleinrichtung ankuppelbar ist, bildet zusammen mit weiteren Antriebskomponenten eine weitere nachrüstbare Baugruppe, wodurch der Vorgang des Umrüstens des Vorsatzgerätes, das heißt der Montage und Demontage der Häckseleinrichtung und des zweiten Antriebsstranges, deutlich vereinfacht wird.

Hierbei kann das Getriebegehäuse als Holm ausgeführt sein, bestehend aus zumindest einer Oberschale und einer Flanschverbindungen aufweisenden Unterschale.

Vorteilhafterweise kann die Oberschale Bestandteil einer Rahmenstruktur des Vorsatzgerätes sein.

Alternativ kann die Oberschale nachträglich an der Rahmenstruktur des Vorsatzgerätes befestigbar sein.

Die vorliegende Erfindung wird nachfolgend anhand eines in den Zeichnungen dargestellten Ausführungsbeispieles näher erläutert.

Es zeigen:
- Fig. 1: eine schematische Darstellung eines modular aufgebauten Vorsatzgerätes;
- Fig. 2: eine Draufsicht auf ein entsprechend ausgeführtes Vorsatzgerät in an einem Schrägförderer eines Mähdreschers angebauter Position;
- Fig. 3: eine schematische Darstellung in Ansicht von oben auf ein an einem Schrägförderer befestigtes Vorsatzgerät;
- Fig. 4: eine schematische Teilansicht einer Rahmenstruktur eines modular aufgebauten Vorsatzgerätes.

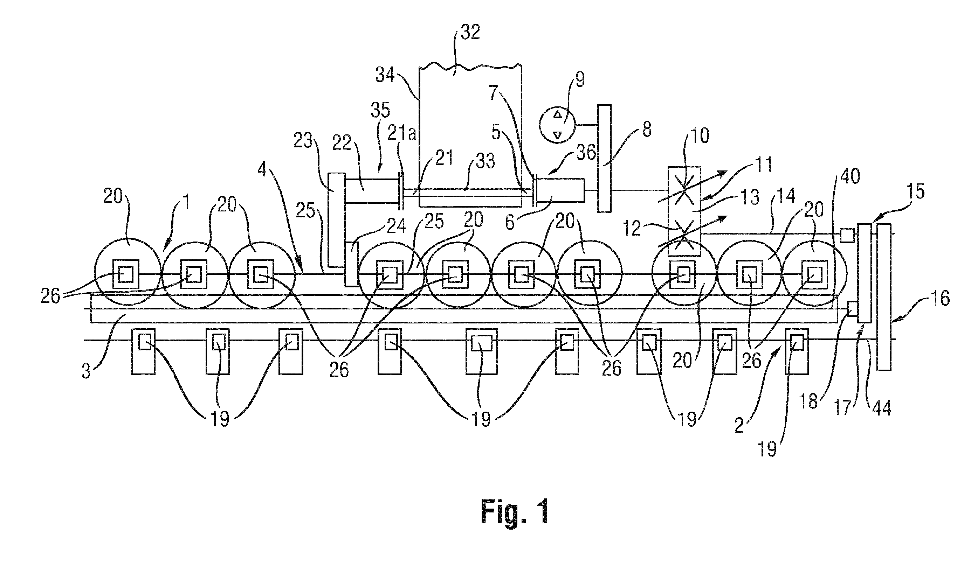

In Fig. 1 ist mit 1 ein Vorsatzgerät bezeichnet, welches unter anderem aus einer Pflückeinrichtung 2, zumindest einer Querfördereinrichtung 3 und einer Häckseleinrichtung 4 besteht. Dabei bilden die Pflückeinrichtung 2 und die zumindest eine Querfördereinrichtung 3 Bestandteile einer Ernteeinrichtung des Vorsatzgerätes 1, die ebenso wie die Häckseleinrichtung 4 von einem nicht näher dargestellten Mähdrescher aus angetrieben werden. Der Antrieb der Pflückeinrichtung 2 und der zumindest einen Querfördereinrichtung 3 erfolgt von einem ersten Abtriebselement 5 des Mähdreschers aus über eine erste Gelenkwelle 6. Diese erste Gelenkwelle 6 ist über eine formschlüssige Kupplung 7 wahlweise mit dem ersten Abtriebselement 5 kuppelbar, das heißt, wenn das Vorsatzgerät 1 an den Mähdrescher angebaut ist, wird die Gelenkwelle 6 über die formschlüssige Kupplung 7 trieblich mit dem ersten Abtriebselement 5 verbunden. Das erste Abtriebselement 5, die erste Gelenkwelle 6 sowie die Kupplung 7 bilden einen ersten Abtriebsstrang 35, über welcher die Pflückeinrichtung 2 sowie die Querfördereinrichtung 3 gemeinschaftlich angetrieben werden.

Die erste Gelenkwelle 6 treibt über einen Riementrieb 8 eine Hydraulikpumpe 9 an, welche für eine Druckmittelversorgung innerhalb des Vorsatzgerätes 1 vorgesehen ist. Zu diesem Zweck sind nicht näher dargestellte Hydraulikkreise vorhanden, über welche mittels entsprechender Hydraulikventile Steuerfunktionen am Vorsatzgerät 1 vorgenommen werden. Weiterhin steht die Gelenkwelle 6 mit einer Primärscheibe 10 eines Variatorgetriebes 11 in Verbindung, welches außerdem eine Sekundärscheibe 12 und einen Treibriemen 13 aufweist. Eine Ausgangswelle 14 des Variatorgetriebes 11, die von der Sekundärscheibe 12 ausgeht, führt zu einem ersten Zugmitteltrieb 15, der aus einem die Pflückeinrichtung 2 antreibenden Riementrieb 16 und einem die Querfördereinrichtung 3 antreibenden Kettentrieb 17 besteht. Weiterhin ist im Antrieb der mindestens einen Querfördereinrichtung 3 eine Überlastkupplung 18 angeordnet, die bei Überschreiten eines Drehmomentwertes selbsttätig den Antrieb der Querfördereinrichtung 3 unterbricht. Weitere Überlastkupplungen 19 sind einzelnen Pflückwalzen der Pflückeinrichtung 2 zugeordnet.

Dem bereits beschriebenen ersten Antriebselement 5 gegenüberliegend ist ein zweites Antriebselement 21 vorgesehen, an welchem eine zweite Gelenkwelle 22 angreift. Diese zweite Gelenkwelle 22 ist über eine formschlüssige Kupplung 21 a wahlweise mit dem ersten Abtriebselement 21 kuppelbar. Die zweite Gelenkwelle 22 treibt über einen Riementrieb 23 und ein Hauptgetriebe 24 die Häckseleinrichtung 4 an. Das zweite Abtriebselement 21, die Kupplung 21 a, die zweite Gelenkwelle 22 sowie der Riementrieb 23 und das Hauptgetriebe 24 bilden einen zweiten Abtriebsstrang 36, der ausschließlich dem Antrieb der Häckseleinrichtung 4 dient.

Wie aus der schematischen Darstellung gemäß der Fig. 1 hervorgeht, gehen von dem Hauptgetriebe 24 Hauptantriebswellen 25 aus, die über in der Figur 1 nicht näher dargestellte, vertikal verlaufende Messerwellen 59 Messer 20 der Häckseleinrichtung 4 antreiben. An den Antrieben der Messerwellen 59, die als Winkelgetriebe ausgebildet sind, befinden sich Überlastkupplungen 26. Ein Ansprechen der Überlastkupplungen 18, 19 oder 26 kann im Übrigen durch eine nicht näher dargestellte Sensorik erfasst werden, so dass dem Fahrer in der Kabine des Mähdreschers ein Ausfall einzelner Pflückwalzen sowie einzelner Messerantriebe der Häckseleinrichtung 4 oder der mindestens einen Querfördereinrichtung 3 signalisiert werden. Das Hauptgetriebe 24 kann im Übrigen ebenfalls als stufenlos einstellbares Getriebe ausgebildet sein. Darüber hinaus besteht die Möglichkeit, das Hauptgetriebe 24 als mehrstufiges Schaltgetriebe auszubilden.

Das Vorsatzgerät 1 ist an einen Schrägförderer 29 des nicht näher dargestellten Mähdreschers gekuppelt. Der Schrägförderer 29 weist eine Schrägfördererwelle 30 auf, die über einen Hauptriementrieb angetrieben wird und im Inneren eines Schrägförderergehäuses 31 im Einzelnen nicht dargestellte Förderketten antreibt. Dabei steht die Schrägfördererwelle 30 beidseitig aus dem Schrägförderergehäuse 31 vor und bildet die Abtriebselemente 5 und 21.

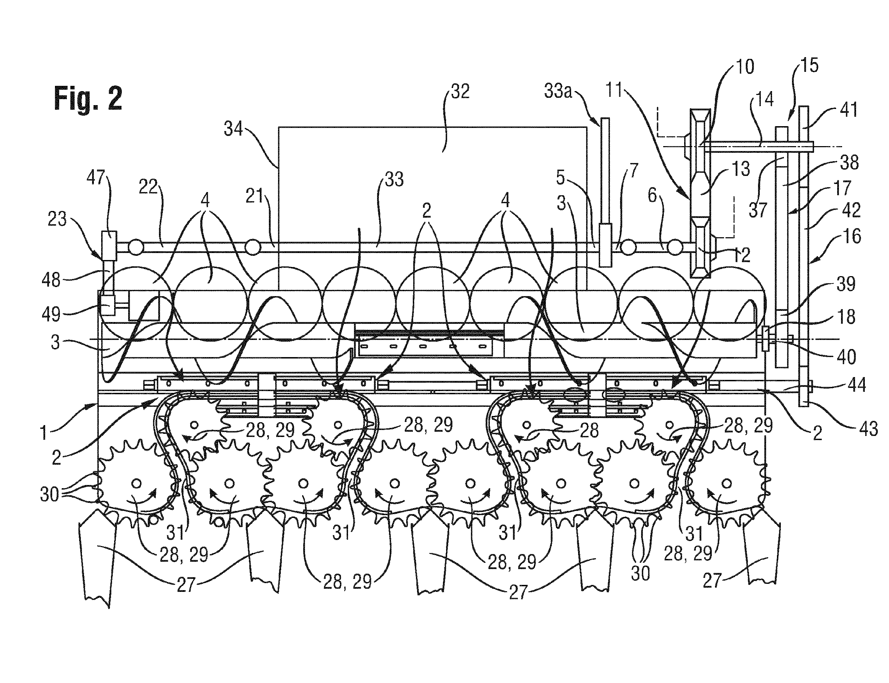

Wie weiterhin aus der Figur 2, die ein gemäß Figur 1 dargestelltes Vorsatzgerät 1 detaillierter darstellt, hervorgeht, weist dieses Vorsatzgerät 1 Halmteiler 27 auf, denen Einzugseinrichtungen 28 nachgeordnet sind, die zum Erfassen und Führen der Maisstängel dienen. Die Einzugseinrichtungen bestehen dabei aus Förderscheiben 29, die an ihrem Umfang mit Förderzinken 31 versehen sind und paarweise mit unterschiedlicher Drehrichtung angetrieben werden. Dabei bewegen die Förderzinken 30 die von ihnen erfassten Maisstängel durch einen Förderkanal 31, an dessen Ende die Maisstängel von quer zur Fahrtrichtung des Mähdreschers verlaufenden Pflückeinrichtungen 2 aufgenommen werden. Der Figur 2 ist weiterhin die Anordnung der Häckseleinrichtung 4 zu entnehmen.

Fig. 2 zeigt das Vorsatzgerät 1, welches an einen Schrägförderer 32 eines nicht näher dargestellten Mähdreschers gekuppelt ist. Der Schrägförderer 32 weist eine Schrägfördererwelle 33 auf, die über einen Hauptriementrieb 33a angetrieben wird und im Inneren eines Schrägförderergehäuses 34 im Einzelnen nicht dargestellte Förderketten antreibt. Dabei steht die Schrägfördererwelle 33 beidseitig aus dem Schrägförderergehäuse 34 vor und bildet die Abtriebselemente 5 und 21. An dem Abtriebselement 5 ist über die formschlüssige Kupplung 7 die erste Gelenkwelle 6 befestigt, die zu der Primärscheibe 10 des Variatorgetriebes 11 führt. Von dieser Primärscheibe 10 aus wird das Antriebsdrehmoment über den Treibriemen 13 auf die Sekundärscheibe 12 übertragen, die über die Ausgangswelle 14 mit einem Antriebsritzel 37 des zum Querförderer 3 führenden Kettentriebs 17 in Verbindung steht. Eine Kette 38 dieses Kettentriebes 17 treibt über ein Abtriebsritzel 39 eine Welle 40 des Querförderers 3 an. Parallel zu diesem Kettentrieb 17 verläuft der Riementrieb 16, der aus einer drehfest mit der Ausgangswelle 14 verbundenen Antriebsriemenscheibe 41, einem Treibriemen 42 und einer mit einer Antriebswelle 44 der Pflückeinrichtung 2 verbundenen Abtriebsriemenscheibe 43 besteht.

Ein zweites Ende der Schrägfördererwelle 33, das ebenfalls über das Schrägförderergehäuse 34 vorsteht, steht, wie bereits im Zusammenhang mit der Figur 1 erläutert, mit einem Antrieb der Häckseleinrichtung 4 in Verbindung. Zu diesem Zweck ist das entsprechende zweite Abtriebselement 21 über die zweite Gelenkwelle 22 mit einer Antriebsriemenscheibe 47 verbunden, die über einen Treibriemen 48 und eine Abtriebsriemenscheibe 49 das Getriebe 24 antreibt. Das Getriebe 24 steht seinerseits, wie zu Fig. 1 erläutert, mit der quer zur Fahrtrichtung des Mähdreschers verlaufenden Hauptantriebswelle 25 der Häckseleinrichtung 4 in Verbindung.

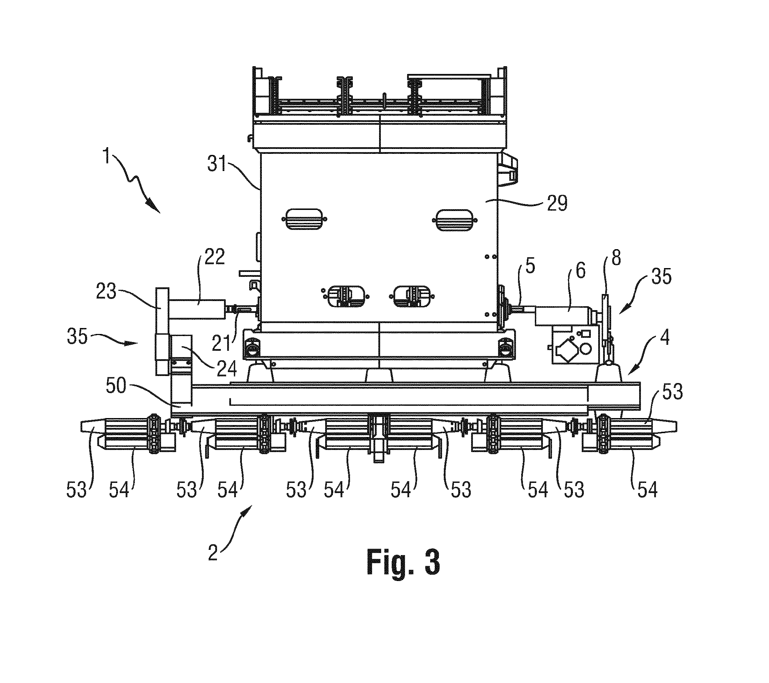

Die Darstellung in Fig. 3 zeigt eine schematische Ansicht von oben auf ein an einem Schrägförderer 29 befestigtes Vorsatzgerät 1. Die Darstellung zeigt den ersten Antriebsstrang 35 nur partiell den zweiten Antriebsstrang 36 vollständig. Wie zuvor bereits ausgeführt, werden über den ersten Antriebsstrang 35 die Pflückeinrichtung 2 sowie die Querfördereinrichtung 3 gemeinschaftlich angetrieben. Die Pflückeinrichtung 2 weist eine Pflückwalzenwelle und auf dieser angeordnete erste Pflückwalzen 53 aufweist. Diese ersten Pflückwalzen 53 stehen antriebsmäßig über ein Zahnradpaar 45 mit zweiten Pflückwalzen 54 in Verbindung, wobei diese zweiten Pflückwalzen 54 an ihren Enden mit Schneckenabschnitten zum Einziehen von Maisstängeln und dergleichen versehen sind.

Der bei Bedarf nachrüstbare zweite Antriebsstrang 36 dient ausschließlich dem Antreiben der Häckseleinrichtung 4. Die Häckseleinrichtung 4 umfasst ein sich im Wesentlichen über die Breite des Vorsatzgerätes 1 erstreckendes Getriebegehäuse 50, in welchem die Hauptantriebswelle 25 angeordnet ist. Die vertikal verlaufenden Messerwellen der Messer 20 ragen in das Innere des Getriebegehäuses 50, in welchem auch die jeweiligen als Winkelgetriebe ausgebildeten Antriebe der Messer 20 angeordnet sind. Das Getriebegehäuse 50 bildet eine nachrüstbare Baugruppe, welche in relativ kurzer Zeit an dem Vorsatzgerät 1 anbringbar sowie von diesem lösbar ist. Das Hauptgetriebe 24, welches an die Hauptantriebswelle 25 der Häckseleinrichtung 4 ankuppelbar ist, bildet zusammen mit dem zweiten Abtriebselement 21, der Kupplung 21 a, der zweiten Gelenkwelle 22 sowie dem Riementrieb 23 eine weitere nachrüstbare Baugruppe, wodurch der Vorgang des Umrüstens des Vorsatzgerätes 1, das heißt der Montage und Demontage der Häckseleinrichtung 4 und des zweiten Antriebsstranges 36, deutlich vereinfacht wird.

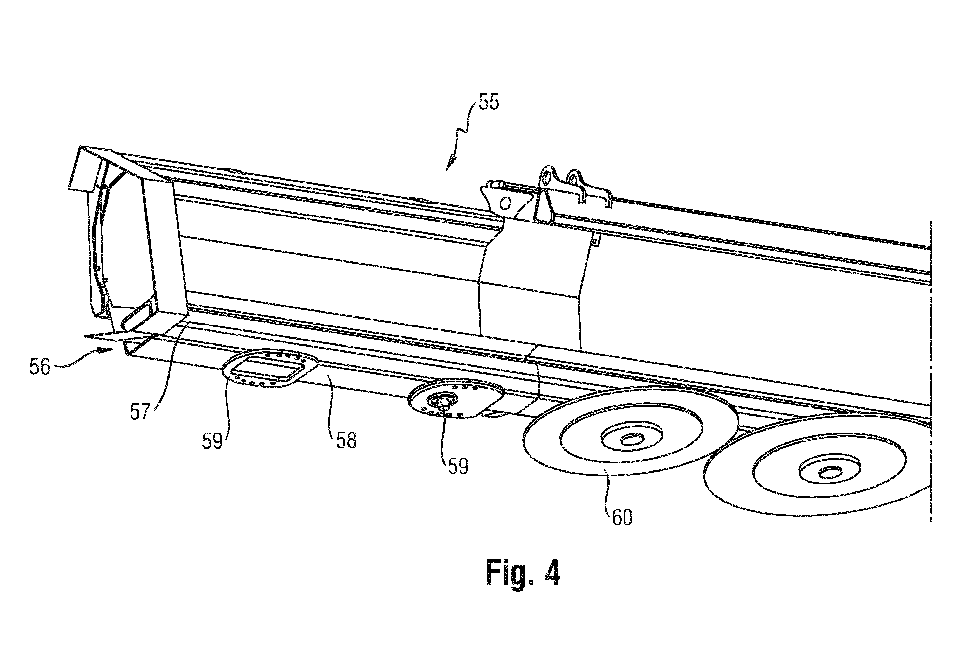

Das Getriebegehäuse 50 ist als ein Holm 56 ausgebildet, der aus zumindest zwei Schalen besteht, einer Unterschale 58 und einer Oberschale 57, wie in Fig. 4 dargestellt. Die Oberschale 57 ist vorzugsweise Bestandteil einer Rahmenstruktur 55 des Vorsatzgerätes 1 oder sie lässt sich an der Rahmenstruktur 55 nachträglich befestigen. Die Unterschale 58 bildet zusammen mit den Winkelgetrieben, den Messerwellen 59 und Messerträgern 69 eine Einheit, welche an der Oberschale 57 anbringbar ist. Das jeweilige Winkelgetriebe ist durch eine Flanschverbindung 59 mit der Unterschale 58 verbunden, wodurch die Winkelgetriebe im Bedarfsfall einzeln austauschbar sind. Die Ausführung des die Winkelgetriebe tragenden Teiles des Getriebegehäuses 50 hat den Vorteil, dass das einzelne Montieren von Komponenten der Häckseleinrichtung 4 entfällt. Zudem lassen sich Fluchtungsfehler der Wellen reduzieren.

**Bezugszeichenliste**

| | | | |
|---|---|---|---|
| 1 | Vorsatzgerät | 31 | Förderkanal |
| 2 | Pflückeinrichtung | 32 | Schrägförderer |
| 3 | Querförderer | 33 | Schrägfördererwelle |
| 4 | Häckseleinrichtung | 33a | Hauptriementrieb |
| 5 | erstes Abtriebselement | 34 | Schrägförderergehäuse |
| 6 | erste Gelenkwelle | 35 | Erster Antriebsstrang |
| 7 | formschlüssige Kupplung | 36 | Zweiter Antriebsstrang |
| 8 | Riementrieb | 37 | Antriebsritzel von 7 |
| 9 | Hydraulikpumpe | 38 | Kette |
| 10 | Primärscheibe | 39 | Abtriebsritzel von 7 |
| 11 | Variatorgetriebe | 40 | Welle von 3 |
| 12 | Sekundärscheibe | 41 | Antriebsriemenscheibe von 16 |
| 13 | Treibriemen | 42 | Treibriemen von 16 |
| 14 | Ausgangswelle | 43 | Abtriebsriemenscheibe von 16 |
| 15 | Zugmitteltrieb | 44 | Antriebswelle von 2 |
| 16 | Riementrieb | 45 | Zahnradpaar |
| 17 | Kettentrieb | 47 | Antriebsriemenscheibe |
| 18 | Überlastkupplung von 3 | 48 | Treibriemen |
| 19 | Überlastkupplung von 2 | 49 | Abtriebsriemenscheibe |
| 20 | Messer von 4 | 50 | Getriebegehäuse |
| 21 | zweites Abtriebselement | 51 | Schneckenabschnitt |
| 21a | formschlüssige Kupplung | 52 | Pflückerwelle von 2 |
| 22 | zweite Gelenkwelle | 53 | erste Pflückwalzen |
| 23 | Riementrieb | 54 | zweite Pflückwalzen |
| 24 | Getriebe | 55 | Rahmenstruktur |
| 25 | Hauptantriebswellen von 4 | 56 | Holm |
| 26 | Überlastkupplungen von 4 | 57 | Oberschale |
| 27 | Halmteiler | 58 | Unterschale |
| 28 | Einzugseinrichtungen | 59 | Messerwelle |
| 29 | Förderscheiben | 60 | Messerträger |
| 30 | Förderzinken | | |

## Patentansprüche

1. Reihenunabhängig arbeitendes Vorsatzgerät (1) mit Ernteeinrichtungen (2, 3, 28) zum Ernten von stängeligem Erntegut, mit sich über seine Breite erstreckenden Einzugseinrichtungen (28), den Einzugseinrichtungen (28) in Richtung des Erntegutflusses nachgeordnete Pflückeinrichtungen (2) und zumindest einer den Einzugs-und Pflückeinrichtungen (2, 28) nachgeordneten Querfördereinrichtung (3), die über einen gemeinsamen Antriebsstrang (35) antreibbar sind,
**dadurch gekennzeichnet,**
**dass** das Vorsatzgerät (1) derart vorkonfektioniert ist, dass es mit einem zweiten Antriebsstrang (36) nachrüstbar ist, der als Antrieb für eine nachrüstbare Häckseleinrichtung (4) dient.

2. Vorsatzgerät (1) nach Anspruch 1, **dadurch gekennzeichnet, dass** der zweite Antriebsstrang und die von diesem angetriebene Häckseleinrichtung als separate Module nachrüstbar sind.

3. Vorsatzgerät (1) nach einem der Ansprüche 1 oder 2, **dadurch gekennzeichnet, dass** der erste Antriebsstrang (35) und der zweite Antriebsstrang (36) Mittel zur Variation der an die angetriebenen Ernteeinrichtungen (2, 3,28) abgebbaren Drehzahl aufweisen.

4. Vorsatzgerät (1) nach Anspruch 3, **dadurch gekennzeichnet, dass** das Mittel eine stufenlose oder eine abgestufte Verstellung der Drehzahl ermöglicht.

5. Vorsatzgerät (1) nach einem der Ansprüche 1 bis 4, **dadurch gekennzeichnet, dass** die Häckseleinrichtung (4) unabhängig von den Einzugseinrichtung (28), den Pflückeinrichtungen (2) und der Querfördereinrichtung (3) schaltbar sind.

6. Vorsatzgerät (1) nach Anspruch 5, **dadurch gekennzeichnet, dass** der zweite Antriebsstrang (36) durch werkzeugloses Aus- und Einkoppeln einer Gelenkwelle (22) schaltbar ist.

7. Vorsatzgerät (1) nach Anspruch 6, **dadurch gekennzeichnet, dass** der zweite Antriebsstrang (36) durch eine zentrale Kupplung (21 a) schaltbar ist.

8. Vorsatzgerät (1) nach Anspruch 7, **dadurch gekennzeichnet, dass** die zentrale Kupplung (21 a) als Reibkupplung ausgeführt ist.

9. Vorsatzgerät (1) nach einem der Ansprüche 5 bis 8, **dadurch gekennzeichnet, dass** der Schaltvorgang automatisiert durchführbar ist.

10. Vorsatzgerät (1) nach einem der Ansprüche 1 bis 9, **dadurch gekennzeichnet, dass** in dem zweiten Antriebsstrang (36) ein zentraler Freilauf vorgesehen ist.

11. Vorsatzgerät (1) nach einem der Ansprüche 1 bis 10, **dadurch gekennzeichnet, dass** die Häckseleinrichtung (4) ein sich im Wesentlichen über die Breite des Vorsatzgerätes (1) erstreckendes Getriebegehäuse (50) aufweist, in welches vertikal verlaufende Messerwellen abschnittsweise hineinragen sowie die Messerwellen antreibende Winkelgetriebe angeordnet sind.

12. Vorsatzgerät (1) nach Anspruch 11, **dadurch gekennzeichnet, dass** an dem Getriebegehäuse (50) ein Hauptgetriebe (24) angeordnet ist, welches Bestandteil des zweiten Antriebsstranges (36) ist.

13. Vorsatzgerät nach einem der Ansprüche 11 oder 12, **dadurch gekennzeichnet, dass** das Getriebegehäuse (50) als Holm ausgeführt ist, bestehend aus zumindest einer Oberschale (57) und einer Flanschverbindungen (59) aufweisenden Unterschale (58).

14. Vorsatzgerät (1) nach Anspruch 11, **dadurch gekennzeichnet, dass** die Oberschale (57) Bestandteil einer Rahmenstruktur (55) des Vorsatzgerätes (1) ist.

15. Vorsatzgerät (1) nach Anspruch 11, **dadurch gekennzeichnet, dass** die Oberschale (57) nachträglich an der Rahmenstruktur (55) des Vorsatzgerätes (1) befestigbar ist.
